# EUROPEAN PATENT APPLICATION

(11) **EP 1 378 469 A1**
(43) Date of publication of application: **07.01.2004**
(21) Application number: 03425053.0
(22) Date of filing: 31.01.2003
(51) Int. Cl.: B65G 53/24, B65G 53/60

(54) **Apparatus for handling bulk materials from not-pressurizable containers**

(30) Priority: 05.06.2002 IT RM20020313
(71) Applicant: P.R.C. Trasporti S.r.l., 35127 Padova (IT)
(72) Inventor: Fiorini, Pietro, 03013 Ferentino (FR) (IT); Erissini, Antonio, 30030 Zelarino (VE) (IT)
(74) Representative: Iannone, Carlo Luigi

(57) **Abstract**

The invention relates to an apparatus (1) for handling bulk products from not-pressurizable containers, said apparatus being coupable with a seal valve, said seal valve being provided with a coupling with the delivery from a compressor and with a coupling to transfer the bulk product within a destination container, said apparatus being characterised in that provides a body, having lower coupling means (4) for coupling with said seal valve and a product discharge opening, a filtering element (6), provided transversely in said body, in such a way to divide the same in a lower part (2) and in an upper part (3), said lower part (2) of the body providing means (5) for coupling with a tube, said tube having the other end provided in a container of the bulk product to be handled, said upper part (3) of the body providing means (7) for coupling with a tube, said tube having the other end coupled to the sucking of a compressor.

## Description

The present invention relates to an apparatus for handling bulk products from not-pressurizable containers.

More specifically, the invention concerns an apparatus of the above said kind allowing to discharge bulk material contained within a silos, or within another kind of container, directly within the transport means container.

In the following, the specification will be mainly addressed to bulk or pellets plastic materials, but it is to be understood that said specification cannot be considered as limitative of the invention, since the same apparatus can be used for different bulk products, such as wheat and like.

As it is well known to all those working in the bulk products transport and storing field, such as, for example, but not exclusively, bulk or pellets plastic materials, they are transported within containers placed on truck or tractors, to be then transferred within containers, or silos, for the storage.

For this transfer operation, truck is provided with an outlet valve, preferably a stellar valve, the operation and the structure of which are well known to all those operating in this field, so that a more detailed description of the same is not necessary.

Said valve is placed at the outlet of the container of the bulk matter provided on the truck, and the material falls on the same by gravity. Stellar valve is coupled, on one side, with a compressor, particularly the compressor provided on the tractor, and on the other side to the head of the container or silos within which the product must be stored.

It also known to all those working in this field that is some cases the need exist, for many different reasons, among which the individuation of a product pollution, to empty the container or silos, recovering the same product and loading the same back on a container provided on a truck or tractor.

In this case, the product is taken from the bottom of the storage container or silos, and thus must be brought again within the container provided on the truck or tractor.

This operation is very long and troublesome, both due to the fact that the lower part of the storage container or silos is not easy to be reached, and due to the fact that an apparatus does not exists able to allow the execution of the operation in a practical and easy way.

Among the solutions presently used, it can be mentioned, for exemplificative purposes, the use of self-sucking silos to recover the product.

In any case, none of the solutions presently available and employed allows to advantageously solve the above-mentioned problem to empty a storage container for a bulk product, and to convey the same within a different container for its transportation.

In this contest, it is included the solution suggested according to the present invention, allowing to have an apparatus able to carry out the above mentioned operations.

It is therefore specific object of the present invention an apparatus for handling bulk products from not-pressurizable containers, said apparatus being coupable with a seal valve, said seal valve being provided with a coupling with the delivery from a compressor and with a coupling to transfer the bulk product within a destination container, said apparatus being characterised in that provides a body, having lower coupling means for coupling with said seal valve and a product discharge opening, a filtering element, provided transversely in said body, in such a way to divide the same in a lower part and in an upper part, said lower part of the body providing means for coupling with a tube, said tube having the other end provided in a container of the bulk product to be handled, said upper part of the body providing means for coupling with a tube, said tube having the other end coupled to the sucking of a compressor.

Preferably, according to the invention, said body is comprised of a body lower part and of a cover upper part, said parts being sealing coupled by sealing coupling means.

Always according to the invention, said coupling means of the apparatus with the valve are comprised of a flange.

Still according to the invention, said opening to discharge the product within the valve is offset with respect to the central axis of the apparatus body.

Furthermore, according to the invention, the bottom of said body is inclined toward said discharge opening.

Still according to the invention, said filtering element has a filtering power based on the granulation of the product.

Further, according to the invention, said compressor can be comprised of the tractor compressor.

Always according to the invention, a relief valve can be provided on said body upper part or on said cover part.

Still according to the invention, said seal valve is a stellar valve.

Finally, according to the invention, said destination container can be a container that ca be placed on a truck or on a tractor.

The present invention will be now described, for illustrative but not limitative purposes, according to its preferred embodiments, with particular reference to the figures of the enclosed drawings, wherein:
figure 1 is a lateral view of the apparatus according to the invention;
figure 2 is a lateral view of the body part of the apparatus according to the invention;
figure 3 is a lateral view of the cover part of the apparatus according to the invention;
figure 4 is a top section view of the cover part shown in figure 3;
figure 5 shows the filtering structure of the apparatus according to the invention; and
figure 6 is a top view of the body part of the apparatus according to the invention.

Observing the figures of the enclosed drawings, it is shown an apparatus according to the invention, generically indicated by the reference number 1, comprising a body part 2 and a cover part 3, said parts being coupable each other.

Said body part 2 provides at the bottom a flange 4, for coupling with a valve (not shown), particularly a stellar valve, provided on the tractor. As already mentioned, the specification will be particularly addressed to the handling of bulk or pellets plastic material, but the apparatus 1 can also be used for handling other kinds of bulk materials. In any case, valve on which the apparatus 1 must be coupled, by the flange 4, must be a seal valve, to allow the operation of the apparatus, as it will be described in greater detail in the following.

On said body 2 of the apparatus 1, a pipe union 5 is provided, for coupling a tube (not shown), said tube having its other end, eventually provided with a probe, within a vessel or like (not shown) provided under the storage container (not shown), within which the product will fall by gravity.

Said cover part 3 is coupled above said body part 2, and fixed to the same by suitable sealing means.

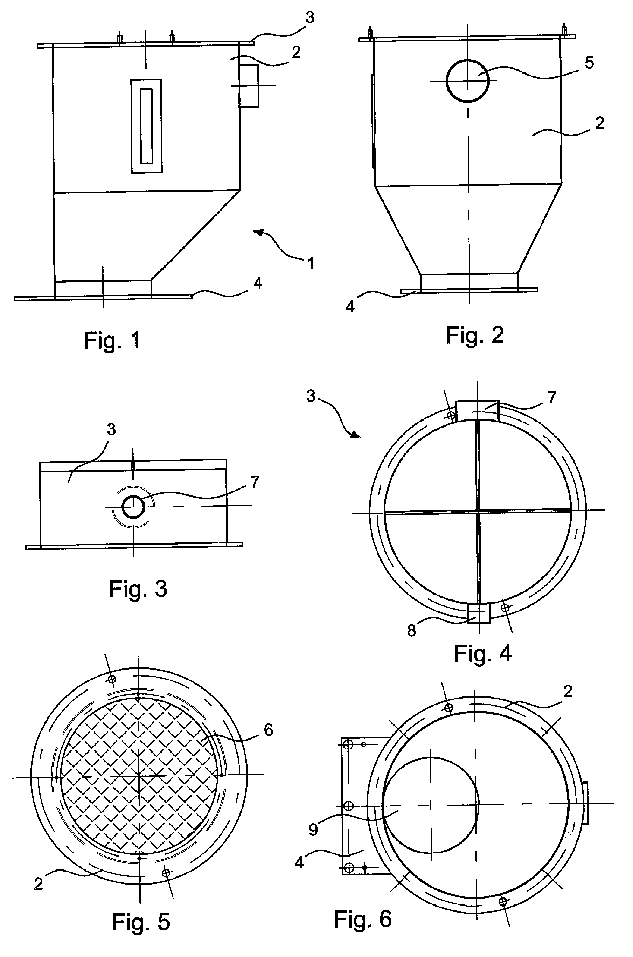

As it can be noted in figure 5, between body 2 and cover 3, before their coupling each other, a filter 6 is placed, to prevent the passage of product or dusts from body 2 toward the cover 3.

Said cover 3 is provided with a pipe union 7 for coupling a tube (not shown), said tube having its other end coupled with a compressor (not shown), preferably the same compressor of the tractor.

Further, a relief valve 8 can be provided on said cover 3, in case conditions occur requiring the bleeding of the apparatus 1 according to the invention.

As it can be particularly noted from figure 6, body 2 has a lower discharge opening 9, through which the product is discharged within the stellar valve (not shown). Said opening 9 is preferably realised offset with respect to the axis of the body 2, in order to facilitate the coupling of the apparatus 1 according to the stellar valve.

Seal valve, e.g. stellar valve (not shown) will be provided with two pipe unions, respectively coupled to two tubes, said tubes being coupled to the compressor and within the destination container.

In the operation of the apparatus 1 according to the invention, after having coupled the same to the valve by the flange 4, pipe union 5 is connected to the storage silos, pipe union 7 is connected to the compressor, and the two pipe unions (not shown) of the valve, are respectively connected to the delivery of the compressor and to the destination container.

Said compressor, when actuated, sucks air from inside the apparatus 1, through the pipe union 7, sending the same air to the corresponding pipe union of the valve (not shown). In this way, being the body 2 of the apparatus 1 connected to the discharge of the storage silos, by the depression created by the compressor within the apparatus 1, the bulk product is brought again within the same body 2. Filter 6 will prevent that the bulk product or other polluting material can enter within the compressor.

Then, product will fall within the valve (not shown), being the valve sealing does not allow the air passage from outside toward the body 2.

In the operation of the valve, compressor sends air to one of the pipe unions, said air thrusting the product, through the other pipe union, within the destination container.

In this way, emptying of the storage container and the filling of the destination container are automatically obtained in a simple and practical way, and mainly very rapidly and by operations that can be easily carried out by the operator.

Furthermore, the solution according to the present invention allows to use, under maximum safety and simple conditions, all the apparatuses already provided on the tractor.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for handling bulk products from not-pressurizable containers, said apparatus being coupable with a seal valve, said seal valve being provided with a coupling with the delivery from a compressor and with a coupling to transfer the bulk product within a destination container, said apparatus being **characterised in that** provides a body, having lower coupling means for coupling with said seal valve and a product discharge opening, a filtering element, provided transversely in said body, in such a way to divide the same in a lower part and in an upper part, said lower part of the body providing means for coupling with a tube, said tube having the other end provided in a container of the bulk product to be handled, said upper part of the body providing means for coupling with a tube, said tube having the other end coupled to the sucking of a compressor.

2. Apparatus according to claim 1, **characterised in that** said body is comprised of a body lower part and of a cover upper part, said parts being sealing coupled by sealing coupling means.

3. Apparatus according to one of the preceding claims, **characterised in that** said coupling means of the apparatus with the valve are comprised of a flange.

4. Apparatus according to one of the preceding claims, **characterised in that** said opening to discharge the product within the valve is offset with respect to the central axis of the apparatus body.

5. Apparatus according to one of the preceding claims, **characterised in that** the bottom of said body is inclined toward said discharge opening.

6. Apparatus according to one of the preceding claims, **characterised in that** said filtering element has a filtering power based on the granulation of the product.

7. Apparatus according to one of the preceding claims, **characterised in that** said compressor is comprised of the tractor compressor.

8. Apparatus according to one of the preceding claims, **characterised in that** a relief valve is provided on said body upper part or on said cover part.

9. Apparatus according to one of the preceding claims, **characterised in that** said seal valve is a stellar valve.

10. Apparatus according to one of the preceding claims, **characterised in that** said destination container is a container that is placed on a truck or on a tractor.

11. Apparatus for handling bulk products from not-pressurizable containers according to each one of the preceding claims, substantially as illustrated and described.
